# FASCICULE DE BREVET EUROPEEN

(11) **EP 3 083 190 B1**
(45) Date de publication et mention de la délivrance du brevet: **01.07.2020**
(21) Numéro de dépôt: 14821797.9
(22) Date de dépôt: 04.12.2014
(51) Int. Cl.: B29C 49/48, B29C 49/06

(54) **DISPOSITIF DE MOULAGE COMPRENANT UN FOND DE MOULE MONOBLOC INCLUANT UNE CAVITÉ D'ÉCHANGE THERMIQUE ÉPOUSANT UNE SURFACE DE MOULAGE**
FORMVORRICHTUNG MIT EINTEILIGEM FORMBODEN MIT EINEM AUF EINE FORMFLÄCHE ABGESTIMMTEN WÄRMEAUSTAUSCHRESONATOR
MOULDING DEVICE INCLUDING A ONE-PIECE MOULD BOTTOM INCLUDING A HEAT-EXCHANGE CAVITY MATCHING A MOULDING SURFACE

(30) Priorité: 19.12.2013 FR 1363086
(43) Date de publication de la demande: 26.10.2016
(73) Titulaire: Sidel Participations, 76930 Octeville-sur-Mer (FR)
(72) Inventeur: LANGLOIS, Jean-Christophe, F-76930 Octeville sur Mer (FR); CHARRIER, Laurent, F-76930 Octeville sur Mer (FR); BOUKOBZA, Michel, F-76930 Octeville sur Mer (FR)
(74) Mandataire: Sidel Group
(86) Numéro de dépôt international: PCT/FR2014/053160
(87) Numéro de publication internationale: WO 2015/092196

(56) Documents cités:
- US-A1- 2006 170 138
- US-A1- 2008 181 982
- US-B1- 6 428 302

## Description

L'invention a trait au formage des récipients à partir d'ébauches en matière plastique, par soufflage ou étirage soufflage dans un moule à l'empreinte d'un modèle de récipient à former. Le terme « ébauche » désigne non seulement une préforme (ordinairement obtenue par injection), mais également un récipient intermédiaire ayant subi une opération préalable de soufflage à partir d'une préforme.

Un moule comprend d'ordinaire plusieurs éléments monoblocs ayant chacun une surface de moulage à l'empreinte d'une partie au moins du récipient. Ainsi, un moule destiné au formage de récipients comprend une paroi latérale à l'empreinte d'un corps et d'une épaule du récipient, généralement divisée en deux demi-moules mutuellement articulés pour permettre l'introduction d'une ébauche dans le moule, et un fond de moule à l'empreinte d'un fond du récipient, ce fond de moule étant positionné dans une ouverture ménagée entre les demi-moules à l'opposé de l'épaule. Pour certains récipients ayant des formes locales particulières (par exemple des excroissances ou des réserves en creux formant poignée), le moule peut comprendre des inserts mobiles à l'empreinte de ces formes.

Les moules sont généralement régulés thermiquement de sorte à les maintenir à une température stable permettant soit de refroidir les récipients en fin de formage (cas général), soit, dans certains cas, au contraire de les chauffer (cas des récipients destinés à être remplis d'un contenu chaud - on parle alors de thermofixation, ou heat setting en Anglais).

Dans les deux cas, une technique bien connue consiste à faire circuler dans le moule un fluide (sous forme gazeuse ou liquide, en général de l'eau ou de l'huile), par un circuit fluidique partiellement formé dans les éléments de moule (demi-moules, fond de moule, inserts éventuels, supports). Pour un refroidissement, le fluide est introduit dans le circuit fluidique à température relativement faible, typiquement de l'ordre de 10°C. Pour une chauffe, le fluide est introduit dans le circuit fluidique à température relativement élevée, typiquement de l'ordre de 140°C. Dans le cas de la chauffe, une technique alternative de régulation thermique consiste à intégrer dans la paroi du moule des résistances électriques, comme proposé dans la demande internationale WO 2013/093335 (Sidel Participations). Les documents US2006/170138A1, US6428302B1 et US2008/181982A1 sont également représentatifs de l'arrière plan technologique.

On comprend aisément que la régulation thermique est d'autant plus efficace que les surfaces d'échange (définies par le circuit fluidique) entre le fluide caloporteur et la matière du récipient sont importantes. Un objectif courant, pour les fabricants de moules, est donc de maximiser les surfaces d'échange définies par le circuit fluidique. Plus précisément, pour des raisons de rationalisation de la fabrication des moules et de limitation de la perte de matière, l'objectif est de maximiser le ratio surface/volume du circuit fluidique. Mais cet objectif se heurte à plusieurs limitations, notamment :
- les contraintes d'usinage (liées aux techniques employées : moulage, tournage, fraisage, électroérosion, etc.),
- les tolérances de fabrication liées à la nécessaire étanchéité du circuit fluidique aux interfaces entre les différentes pièces composant les éléments de moule,
- la tenue mécanique des moules (que l'on a avantage à maximiser),
- la consommation de fluide caloporteur (que l'on a avantage à minimiser),
- les contraintes d'encombrement, l'environnement d'un moule de soufflage étant particulièrement encombré.

Le fond de moule est un bon concentré des problématiques nées de la régulation thermique car la forme de son empreinte est généralement complexe, son volume est restreint, et il est souvent indépendant des demi-moules (ce qui implique un circuit fluidique indépendant avec ses propres conduits d'alimentation et d'évacuation, raccordés à des flexibles). Un exemple typique de fond de moule est présenté dans le document EP 0 742 094 (Asahi) : ce fond de moule est équipé d'un circuit fluidique (en l'occurrence de refroidissement) dont il est indiqué qu'il est usiné aussi près que possible de la surface, de sorte à maintenir une bonne efficacité du refroidissement.

La technique consistant à percer des canaux transversaux dans le fond (qu'il faut ensuite raccorder) peut convenir lorsque, comme dans l'exemple illustré dans ce document, la surface d'empreinte est plate. En revanche, dès lors que cette surface est en relief, il n'est plus possible d'approcher les canaux au plus près de la surface, au risque de déboucher sur celle-ci. Au mieux, on peut, en perçant les canaux à la fois obliquement et radialement, suivre grossièrement (et seulement localement) le relief, comme illustré dans les brevets américains US 5 971 740 (Rees) et US 5 762 981 (Wentworth). Mais cette technique ne permet pas de réaliser des échanges thermiques homogènes, les parties du fond du récipient situées à l'aplomb des canaux bénéficiant d'un meilleur refroidissement (ou inversement un meilleur réchauffement) que les parties qui sont décalées angulairement des canaux.

Une autre technique, destinée à améliorer l'efficacité (et plus précisément l'homogénéité) des échanges thermiques, consiste à pratiquer dans le fond de moule, par fraisage, une rainure unique ayant des portions circulaires concentriques reliées par des portions droites radiales pour former, grossièrement, un canal unique en forme de serpentin continu dans lequel le fluide entre par une ouverture centrale pour en sortir par une ouverture périphérique.

Une telle architecture, présentée dans le document US 7 025 584 (Wentworth) qui prévoit en outre de rapporter un plateau diviseur muni de pions en saillie destinées à former des chicanes dans le canal, n'est cependant pas non plus sans défaut.

Premièrement, dans le cas d'une surface de moulage dépourvue de symétrie de révolution, la forme de serpentin du canal ne résout pas le problème du défaut d'homogénéité de l'échange thermique. Typiquement, dans un fond de moule à l'empreinte d'un fond pétaloïde, dont le relief est particulièrement torturé, les reliefs correspondant aux pieds, plus proches du canal, bénéficient immanquablement d'un meilleur échange thermique que les reliefs correspondant aux vallées, relativement plus éloignées du canal.

Deuxièmement, la réalisation en serpentin du canal (au lieu d'une série de canaux radiaux) induit une diminution progressive de la capacité calorifique du fluide le long du canal, les zones dont la distance (mesurée en abscisse curviligne le long du canal) à l'ouverture centrale est faible offrant une meilleure capacité d'échange thermique que les zones dont la distance à l'ouverture centrale est relativement plus importante. Cette géométrie ne pose pas de problème dans la zone centrale du fond, qui doit en général bénéficier du maximum d'échange thermique, qu'il s'agisse de le refroidir, comme dans le cas d'un récipient ordinaire destiné à de l'eau plate, ou au contraire de le réchauffer, comme dans le cas d'un récipient thermofixé. Cette géométrie pose en revanche problème au niveau des zones périphériques similaires (par exemple les empreintes des pieds dans un fond pétaloïde), dont la distance radiale au centre du fond est identique et qui devraient recevoir (ou concéder) le même nombre de calories au fluide caloporteur, mais qui en raison de leur distance curviligne au centre (mesurée le long du canal) différente, reçoivent (ou concèdent) un nombre de calories différent compte tenu de l'épuisement progressif des capacités calorifiques du fluide caloporteur.

Troisièmement, l'étanchéité d'un tel fond de moule est difficile à assurer. Certes, on insère des joints (notamment toriques) aux interfaces entre les différentes pièces, mais compte tenu des cycles thermiques ces joints subissent une fatigue accélérée qui aboutit à des fuites. Il en résulte de fréquentes opérations de maintenance qui interrompent la production.

Quatrièmement, la fabrication de ce fond de moule est longue et complexe. Elle implique au minimum une première opération de réalisation d'une ébauche (par moulage ou par usinage) de l'élément monobloc de fond de moule, une deuxième opération de réalisation (par fraisage) de la rainure, une troisième opération de réalisation (par usinage) d'une plaque rapportée servant de couvercle au circuit fluidique, puis une quatrième opération d'assemblage (par vissage) de la plaque sur l'élément monobloc avec interposition d'au moins un joint d'étanchéité.

Plusieurs objectifs sont par conséquent visés, individuellement ou en groupe :
- améliorer l'homogénéité des échanges thermiques dans un fond de moule voire même, de préférence, assurer ces échanges thermiques selon un profil prédéterminé quel que soit le relief de la surface de moulage,
- maximiser le rendement des échanges thermiques, aux fins de réaliser des économies énergétiques, d'améliorer la qualité des récipients produits et de réduire le temps de cycle ;
- améliorer l'étanchéité du fond de moule ;
- simplifier et accélérer la fabrication du fond de moule.

A cet effet, il est proposé, selon un premier aspect, un fond de moule monobloc destiné à un moule pour la fabrication de récipients par soufflage ou étirage soufflage à partir de préformes en matière plastique, ce fond de moule comprenant une paroi de moulage ayant une surface de moulage en relief à l'empreinte d'au moins une partie d'un fond de récipient, et une cavité incluse dans le fond de moule et délimitée par une enveloppe surfacique intégralement définie par le fond de moule et incluant une surface interne de la paroi de moulage, opposée à la surface de moulage et épousant le relief de celle-ci, et une surface arrière en regard de la surface interne, le fond de moule étant muni d'au moins une ouverture d'entrée et d'au moins une ouverture de sortie pour la circulation du fluide caloporteur de la cavité.

La réalisation monobloc de ce fond de moule avec sa cavité intégrée permet notamment d'optimiser l'échange thermique entre le fluide circulant dans la cavité et la matière du récipient qui vient se plaquer contre la surface de moulage au cours du formage.

Diverses caractéristiques supplémentaires peuvent être prévues, prises séparément ou en combinaison :
- la surface interne de la paroi de moulage couvre sensiblement la totalité de la surface de moulage ;
- la paroi de moulage présente une épaisseur sensiblement uniforme ;
- la paroi de moulage présente une épaisseur comprise entre 0,5 mm et 5 mm, par exemple de 1 mm environ ;
- la surface arrière est portée par une paroi secondaire qui rejoint la paroi de moulage sur un bord périphérique du fond de moule ;
- l'ouverture d'entrée est formée par une série de trous traversants ménagés dans la paroi secondaire ;
- le fond de moule comprend une chambre de distribution qui jouxte la cavité en étant séparée de celle-ci par une portion centrale de la paroi secondaire dans laquelle sont ménagés les trous traversants ;
- le fond de moule comprend au moins un collecteur dans lequel débouche au moins une ouverture de sortie ;
- le collecteur se présente sous forme d'un conduit annulaire périphérique ;
- le fond de moule est muni d'au moins une descente dans laquelle débouche le collecteur, et qui se termine par un orifice d'évacuation ;
- le fond de moule comprend des piliers et/ou un réseau tridimensionnel reliant la surface interne de la paroi de moulage à la surface arrière.

Il est proposé, selon un deuxième aspect, un moule pour la fabrication de récipients à partir d'ébauches en matière plastique, qui comprend au moins un fond de moule tel que présenté ci-dessus.

Il est proposé, selon un troisième aspect, un procédé de fabrication d'un fond de moule tel que présenté ci-dessus, ce procédé comprenant une phase d'obtention d'une ébauche du fond de moule par fabrication directe à partir d'une poudre métallique.

L'ébauche du fond de moule est par exemple obtenue par construction laser additive directe ; la poudre métallique est de préférence une poudre d'acier, notamment d'acier inoxydable.

D'autres objets et avantages de l'invention apparaîtront à la lumière de la description d'un mode de réalisation, faite ci-après en référence aux dessins annexés dans lesquels :
- la figure 1 est une vue en perspective d'un moule pour le formage de récipients à fond pétaloïde, qui comprend deux demi-moules articulés et un fond de moule ;
- la figure 2 est une vue en perspective du fond de moule ;
- la figure 3 est une vue de dessus du fond de moule ;
- la figure 4 est une vue en perspective, en coupe et en arraché partiels, du fond de moule de la figure 3, suivant la ligne de coupe IV-IV ;
- la figure 5 est une section de l'élément de la figure 1, selon la ligne de coupe V-V, monté sur une embase incluant en partie un conduit d'alimentation et un conduit d'évacuation.

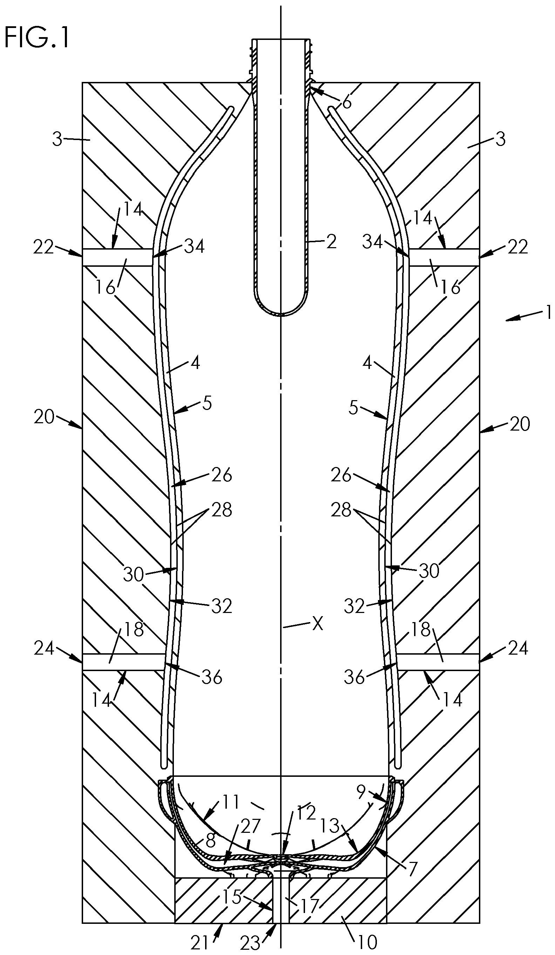

On a représenté sur la figure 1 un moule **1** pour le formage d'un récipient à partir d'une ébauche **2** en matière plastique, par soufflage ou étirage soufflage.

L'ébauche **2** peut être un récipient intermédiaire ayant subi une première opération de soufflage à partir d'une préforme. Il peut également s'agir, comme dans l'exemple illustré, d'une préforme obtenue par injection d'une matière plastique telle que PET.

Le moule **1** inclut plusieurs éléments monoblocs réalisés de préférence dans une matière métallique, par exemple en acier ou en aluminium, éventuellement alliés pour accroître leurs performances mécaniques et/ou de résistance à la corrosion.

Ainsi, dans l'exemple illustré, le moule inclut deux demi-moules **3** mutuellement articulés autour d'un axe X vertical pour permettre l'introduction de l'ébauche **2** (comme décrit par exemple dans la demande de brevet français FR 2 856 333 ou dans la demande internationale correspondante WO 05/002820), et ayant chacun une paroi **4** de moulage définissant une surface **5** de moulage en relief, à l'empreinte d'un corps du récipient à former.

Les deux demi-moules **3** définissent, à une extrémité supérieure, une ouverture **6** au travers de laquelle la préforme **2** s'étend pendant le formage du récipient. Les deux demi-moules **3** étant identiques, on utilise indifféremment pour chacun, dans ce qui suit, les mêmes références numériques.

Le moule **1** inclut en outre un fond **7** de moule monobloc comprenant une paroi **8** de moulage définissant une surface **9** de moulage en relief à l'empreinte d'un fond du récipient. Comme illustré, le fond **7** de moule peut être monté sur un support **10** de fond de moule, appelé sellette. La sellette **10** est mobile en translation suivant une direction axiale confondue avec l'axe X central.

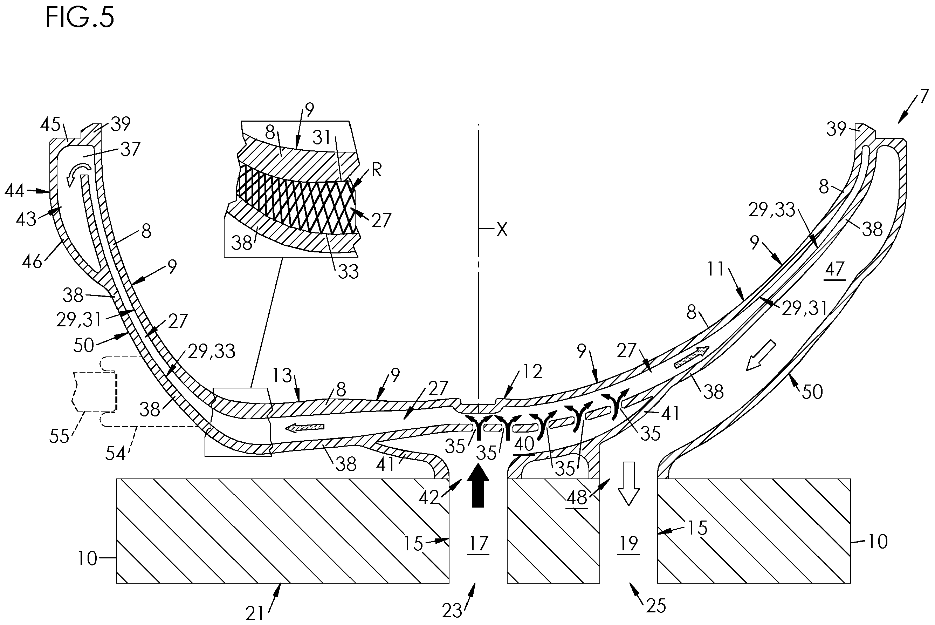

La sellette **10** n'est que grossièrement représentée sur les figures 1 et 5. A titre d'exemple de réalisation non limitatif d'une telle sellette, on pourra se reporter à la demande internationale WO 2008/000938 (Sidel Participations).

En variante, la sellette **10** peut être intégrée au fond **7** de moule, en étant réalisée d'un bloc avec celui-ci. De même, une connectique pour le raccord rapide de tubulures d'alimentation et d'évacuation du fluide caloporteur peut être au moins partiellement intégrée à la sellette **10**, de manière monobloc, typiquement sous forme d'empreintes femelles dans lesquelles sont aptes à venir s'encliqueter des embouts mâles prévus aux extrémités des tubulures d'alimentation et d'évacuation.

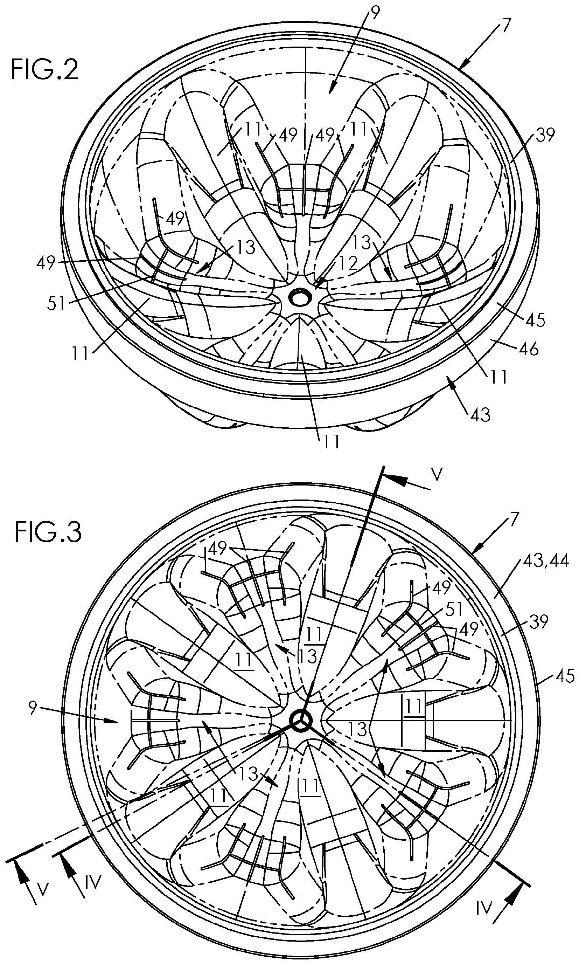

Le récipient à former est en l'occurrence à fond de type pétaloïde, ce qui ressort bien des figures 2, 3 et 4. On voit en effet que la surface **9** de moulage du fond **7** de moule est bosselée et présente, lorsqu'examinée en révolution autour de l'axe X central du moule, une alternance de nervures **11** (à l'empreinte de vallées sur le fond pétaloïde) qui rayonnent à partir d'une zone **12** centrale voisine de l'axe X, et de réserves **13** en creux (à l'empreinte de pieds sur le fond pétaloïde) qui s'étendent entre les nervures **11**. Dans l'exemple illustré, le nombre de nervures **11** (identique au nombre de réserves **13** en creux) est de cinq, mais ce nombre, purement illustratif, pourrait être différent.

On comprend donc que la surface **9** de moulage du fond **7** de moule est complexe, c'est-à-dire qu'elle ne présente aucune symétrie de révolution, bien que pouvant être composée (comme dans l'exemple illustré) d'une répétition circulaire d'un même motif (ici une nervure **11** et une réserve **13** en creux) autour de l'axe X.

De même, bien que pouvant présenter localement une invariance par rotation autour de l'axe X du moule, les surfaces **5** de moulage des demi-moules **3** ne sont pas symétriques de révolution.

Le moule **1** comprend en outre au moins un circuit **14**, **15** fluidique pour la circulation d'un fluide caloporteur dans au moins l'un des éléments **3**, **7** de moule. Le fluide peut être de l'eau, ou encore de l'huile ; il peut être injecté dans le circuit **14**, **15** à une température relativement basse (par exemple de l'ordre de 10°C) pour réaliser un refroidissement du récipient en fin de cycle de formage, ou au contraire à une température élevée (par exemple de l'ordre de 140°C) pour réaliser une thermofixation du récipient en fin de cycle, dans le but d'en accroître la ténacité (c'est-à-dire la résistance mécanique) par augmentation par voie thermique du taux de cristallinité, ce qui le rend ainsi résistant aux contraintes thermiques subies lors d'un remplissage à chaud.

Dans l'exemple illustré, le moule **1** comprend un circuit fluidique pour chaque élément de moule : un premier circuit **14** pour chaque demi-moule **3** et un deuxième circuit **15** pour le fond **7** de moule.

Chaque circuit **14**, **15** comprend un conduit **16**, **17** d'alimentation respectif et un conduit **18**, **19** d'évacuation respectif, formés au moins pour partie dans l'élément **3**, **7** de moule, par exemple par des perçages.

Le conduit **16** d'alimentation de chaque demi-moule **3** et le conduit **17** d'alimentation du fond **7** de moule débouchent respectivement sur une surface **20** externe du demi-moule **3** et sur une surface externe **21** du support en un orifice **22**, **23** d'entrée respectif, par lequel est amené le fluide caloporteur (par exemple par une tubulure d'alimentation branchée sur la sellette **10** par l'intermédiaire d'un raccord rapide).

Le conduit **18** d'évacuation de chaque demi-moule **3** et le conduit **19** d'évacuation du fond **7** de moule débouchent respectivement sur la surface **20** externe du demi-moule **3** et sur la surface **21** externe du support en un orifice **24**, **25** de sortie respectif, par lequel est évacué le fluide caloporteur (vers une tubulure d'évacuation branchée sur la sellette **10**, par exemple par l'intermédiaire d'un raccord rapide) après avoir effectué un échange thermique avec le récipient en cours de formage, au travers de la paroi **4**, **8** de moulage.

Sur la figure 1, on a représenté un conduit **16** d'alimentation et un conduit **18** d'évacuation pour chaque demi-moule **3**, qui débouchent respectivement par un orifice **22** d'entrée et par un orifice **24** de sortie sur une surface **20** externe de celui-ci. On peut brancher sur chaque demi-moule **3** un flexible d'alimentation sur l'orifice **22** d'entrée, et un flexible séparé d'évacuation sur l'orifice **24** de sortie. Selon un mode particulier de réalisation, l'orifice **22** d'entrée et l'orifice **24** de sortie peuvent être voisins pour permettre un branchement d'une fiche monobloc assurant à la fois la fonction d'alimentation en fluide et d'évacuation du fluide, comme illustré dans la demande de brevet européen EP 2 043 840 (Sidel).

Le ou chaque circuit **14**, **15** fluidique comprend en outre, entre le conduit **16**, **17** d'alimentation et le conduit **18**, **19** d'évacuation, une cavité **26**, **27** incluse dans l'élément **3**, **7** de moule, dans laquelle le fluide caloporteur circule lors du formage du récipient pour assurer l'échange thermique avec celui-ci.

Cette cavité **26**, **27** est délimitée par une enveloppe **28**, **29** surfacique intégralement définie par l'élément **3**, **7** de moule (en l'occurrence chaque demi-moule **3** ou le fond **7** de moule), c'est-à-dire que la cavité **26**, **27** est entièrement délimitée par la matière de l'élément **3**, **7** de moule, sans être, même partiellement, délimitée par une pièce rapportée.

L'enveloppe **28**, **29** délimitant la cavité **26**, **27** inclut :
- une surface **30**, **31** interne de la paroi **4**, **8** de moulage, opposée à la surface **5**, **9** de moulage et épousant le relief de celle-ci,
- une surface **32**, **33** arrière en regard de cette surface **30**, **31** interne.

La surface **32**, **33** arrière est percée d'au moins deux ouvertures :
- au moins une ouverture **34**, **35** d'entrée par laquelle le fluide en provenance du conduit **16**, **17** d'alimentation entre dans la cavité **26**, **27**,
- au moins une ouverture **36**, **37** de sortie décalée de l'ouverture **34**, **35** d'entrée et par laquelle le fluide ayant circulé dans la cavité **26**, **27** sort de celle-ci en direction du conduit **18**, **19** d'évacuation.

Sur la figure 1, on a représenté une telle cavité **26** formée dans chacun des demi-moules **3**. Cette cavité **26** épouse sensiblement le relief de la surface **5** de moulage à l'empreinte du corps du récipient, ce qui permet un échange thermique relativement homogène sur l'ensemble du corps. Par ailleurs, on voit sur la figure 1 que la paroi **4** de moulage est relativement mince (et d'épaisseur sensiblement uniforme, ce qui n'est pas une obligation), ce qui bénéfice à l'efficacité du refroidissement (ou de la chauffe).

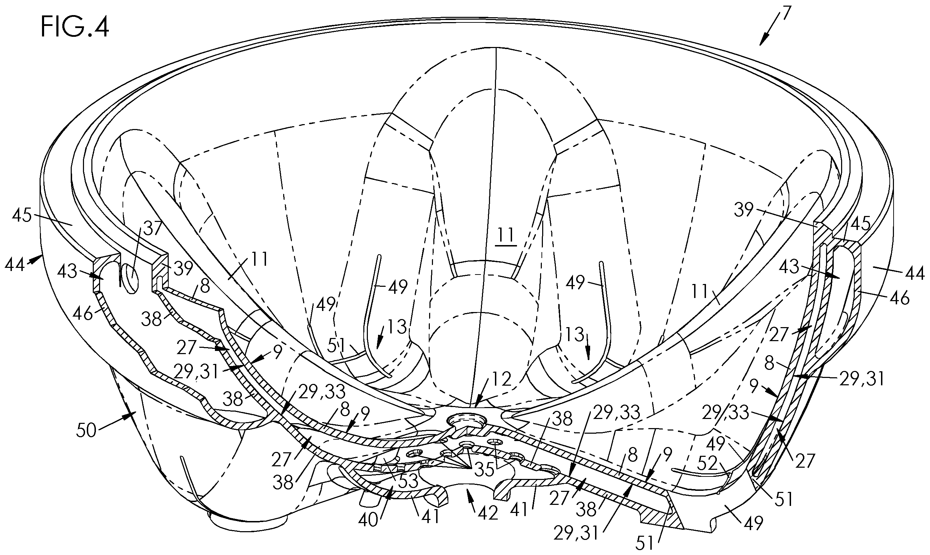

On a représenté le fond **7** de moule sur les figures 2 à 5, pour illustrer plus en détail la structure de sa cavité **27**. Ainsi, comme cela est montré sur la figure 4, la cavité **27** épouse sensiblement le relief de la surface **9** de moulage. On voit que, dans le mode de réalisation représenté, la paroi **8** de moulage est mince au regard des dimensions générales (notamment diamètre et hauteur) du fond **7** de moule. Plus précisément, selon un mode particulier de réalisation, l'épaisseur de la paroi **8** de moulage (mesurée perpendiculairement à tout plan normal à la surface **9** de moulage) est comprise entre 0,5 mm et 5 mm environ, de préférence entre 1 mm et 3 mm, et par exemple de l'ordre de 1 mm dans l'exemple illustré. Cette épaisseur, qui dépend de la conductibilité thermique du matériau employé, est adaptée pour maximiser les échanges thermiques tout en minimisant la quantité de matière nécessaire à la fabrication du fond **7** de moule.

Cette épaisseur peut être sensiblement constante, comme dans l'exemple illustré sur les figures 4 ou 5, où les variations apparentes d'épaisseur résultent de ce que le plan de coupe ne coïncide pas, en certains points, avec la normale à la surface **9** de moulage et sectionne donc obliquement la paroi **8** de moulage, notamment sur les flancs des nervures **11** correspondant aux vallées du récipient (à gauche sur la figure 5).

Ce mode de réalisation correspond à un objectif de relative uniformité des échanges thermiques avec la matière du récipient en contact avec la surface **9** de moulage ; néanmoins, on peut prévoir des variations d'épaisseur de la paroi **8** de moulage, notamment pour faire varier localement la quantité de calories échangées entre le fluide caloporteur et le récipient, selon le profil thermique souhaité. Ainsi, dans le cas d'un refroidissement, on peut envisager d'accroître localement l'épaisseur de la paroi **8** de moulage au droit des zones de la surface **9** de moulage correspondant à des parties du récipient nécessitant moins de retrait de calories. A contrario, on peut amincir localement la paroi **8** de moulage au droit des zones de la surface **9** de moulage correspondant à des parties du récipient nécessitant un refroidissement accru, par exemple au centre du fond du récipient, où la matière, qui subit un étirement moindre que les zones périphériques, demeure relativement épaisse et amorphe.

Comme on le voit sur les figures 4 et 5, le fond **7** de moule, réalisé d'une seule pièce monobloc, présente une paroi **38** secondaire qui définit la surface **33** arrière. Cette paroi **38** secondaire présente de préférence une épaisseur faible au regard des dimensions générales du fond **7** de moule. Dans l'exemple illustré, l'épaisseur de la paroi **38** secondaire est comprise entre 0,5 mm et 5 mm, de préférence entre 1 mm et 3 mm, et par exemple de l'ordre de 1 mm.

La paroi **8** de moulage et la paroi **38** secondaire forment ainsi deux nappes superposées qui épousent sensiblement le relief de la surface **9** de moulage et délimitent conjointement la cavité **27,** leurs surfaces **31**, **33** en regard définissant, pour l'essentiel de sa superficie, l'enveloppe **29**.

La cavité **27** du fond **7** de moule peut être localisée au droit d'une zone limitée de la surface **9** de moulage pour limiter les échanges thermiques à une telle zone limitée ; de même, la cavité **26** d'un demi-moule **3** peut être localisée au droit d'une zone limitée de la surface **5** de moulage. Toutefois, selon un mode de réalisation préféré illustré sur les figures, la cavité **27** (respectivement **26**) n'est pas localisée et s'étend au droit de l'ensemble de la surface **9** (respectivement **5**) de moulage, pour permettre un échange thermique avec l'ensemble du fond (respectivement du corps) du récipient.

Ainsi, dans l'exemple illustré, la surface **31** interne de la paroi **8** de moulage (et donc la cavité **27**) couvre sensiblement la totalité de la surface **9** de moulage. La cavité **27** s'étend jusqu'à une jonction entre les parois **8**, **38**, au niveau d'un bord **39** périphérique supérieur du fond **7** de moule, où la surface **9** de moulage de celui-ci se raccorde à la surface **5** de moulage des demi-moules **3**.

Selon un mode de réalisation préféré, illustré sur les figures 4 et 5, l'ouverture **35** d'entrée est formée par une série de trous traversants ménagés dans la paroi **38** secondaire. Dans l'exemple illustré, le fond **7** de moule comprend une chambre **40** de distribution qui jouxte la cavité **37** en étant séparée de celle-ci par une portion centrale de la paroi **38** secondaire dans laquelle sont ménagés les trous **35** formant l'ouverture d'entrée. La chambre **40** de distribution est délimitée, d'une part, par cette portion centrale de la paroi **38** secondaire et, d'autre part, par une paroi **41** latérale qui s'étend en s'évasant à la manière d'un pavillon, depuis un orifice **42** d'alimentation centré sur l'axe X du moule **1**, par lequel la chambre **40** se raccorde fluidiquement au conduit **17** d'alimentation, jusqu'à une jonction de la paroi **41** latérale avec la paroi **38** secondaire.

L'ouverture **37** de sortie se présente sous la forme d'au moins un trou traversant ménagé dans la paroi **38** secondaire. Comme on le voit sur les figures 4 et 5, ce trou **37** est avantageusement formé selon un axe radial au voisinage du bord **39** périphérique supérieur du fond **7** de moule.

Selon un mode préféré de réalisation, le fond **7** de moule est pourvu d'une série de tels trous **37**, répartis sur la périphérie du fond **7**, de préférence à l'aplomb des réserves **13** en creux correspondant aux pieds du récipient. Cette disposition permet de forcer le fluide à circuler autour des réserves **13** en creux. En effet, en raison de leur forte inclinaison sur le pourtour du fond **7**, les parties de la cavité **27** située au droit des réserves **13** en creux apparaissent plus difficiles d'accès pour le fluide que les parties de la cavité **27** situés à l'aplomb des nervures **11**, aux pentes plus douces.

Le fond **7** de moule comprend par ailleurs au moins un collecteur **43** dans lequel débouche au moins l'un des trous **37**. Dans le mode de réalisation illustré, un unique collecteur est prévu, dans lequel débouche chaque trou **37**. Ce collecteur **43** se présente sous forme d'un conduit creux annulaire périphérique. Plus précisément, le collecteur **43** ceinture la paroi **38** secondaire par l'extérieur, au voisinage du bord **39** périphérique supérieur. Comme on le voit sur les figures 4 et 5, le collecteur **43** est délimité intérieurement par la paroi **38** secondaire, et extérieurement par une paroi **44** extérieure comprenant une section **45** supérieure annulaire qui s'étend radialement à partir du bord **39** périphérique, et une section **46** inférieure qui s'étend d'abord axialement à partir de la section **45** supérieure puis de manière cintrée vers l'intérieur du fond **7** de moule pour se raccorder à la paroi **38** secondaire.

Le fond **7** de moule comprend en outre au moins une descente **47** (visible à droite sur la figure 5) dans laquelle débouche le collecteur **43**. La ou chaque descente **47** se présente sous forme d'un conduit creux accolé à la paroi **38** secondaire le long d'une nervure **11**, depuis le collecteur **43** jusqu'à un orifice **48** d'évacuation par lequel la descente **47** se raccorde fluidiquement au conduit **19** d'évacuation.

Selon un mode préféré de réalisation de la figure 5, l'orifice **42** d'alimentation et l'orifice **48** d'évacuation sont coplanaires. En outre, l'orifice **48** d'évacuation est décalé radialement par rapport à l'orifice **42** d'alimentation, lequel est ici centré sur l'axe X du moule **1**.

Dans l'exemple illustré, le fond **7** de moule comprend une unique descente **47**. En variante, le fond **7** de moule peut comprendre deux descentes, par exemple diamétralement opposées, ou une série de descentes qui peuvent être réparties angulairement de manière uniforme à la périphérie du fond **7** de moule. Dans ce cas, plusieurs conduits **19** d'évacuation peuvent être formés dans le support **10**, ces conduits convergeant vers un conduit unique à partir duquel le fluide sortant du fond **7** de moule est évacué.

Selon un mode de réalisation illustré sur les figures 2 à 4, le fond **7** de moule est pourvu d'évents **49** de décompression qui permettent, lorsque le récipient est formé, d'évacuer l'air emprisonné entre celui-ci et la surface **9** de moulage.

Comme on le voit bien sur les figures, et plus en détail sur la figure 4, chaque évent **49** se présente sous la forme d'une fente continue qui traverse complètement le fond **7** de moule, au travers, conjointement, de la paroi **8** de moulage, de la cavité **37** et de la paroi **38** secondaire, pour déboucher sur une surface **50** externe du fond **7** de moule. L'évent **49** ne débouche pas dans la cavité **27** ; la portion de l'évent **49** qui s'étend au travers de la cavité **27** est délimitée par une paroi **51** à contour fermé reliant la paroi **8** de moulage à la paroi **38** secondaire. Cette disposition assure une décompression plus efficace que les classiques trous, dont le débit est insuffisant. Dans l'exemple de réalisation illustré sur les figures 2, 3 et 4, les évents **49** sont formés dans les réserves **13** en creux correspondant aux pieds du récipient. Trois évents **49** sont prévus au fond de chaque réserve **13** en creux : deux évents **49** latéraux qui s'étendent au voisinage et le long d'une jonction entre une nervure **11** et une réserve **13**, et un évent **49** médian qui s'étend entre les évents **49** latéraux, le long d'une ligne médiane de la réserve **13** en creux. Pour répartir l'air de manière relativement uniforme entre les évents **49**, ceux-ci peuvent être reliés par une gorge **52** de faible profondeur creusée dans la surface **9** de moulage et qui met les évents **49** en communication.

On a illustré par des flèches la circulation du fluide dans le fond de moule sur la figure 5. Le fluide entrant (qui n'a pas subi d'échange thermique à travers la paroi **8** de moulage) est représenté par des flèches noires ; le fluide sortant (qui a terminé son échange thermique à travers la paroi **8** de moulage) par des flèches blanches, et le fluide circulant dans la cavité **27** (en cours d'échange thermique à travers la paroi **8** de moulage) par des flèches grisées.

Le fluide sous pression en provenance du conduit **17** d'alimentation entre dans le fond **7** de moule par l'orifice **42** d'alimentation. Le fluide entrant emplit d'abord la chambre **40** de distribution. Puis il est diffusé dans la cavité **27** au travers de l'ouverture **35** d'entrée dans la cavité **27** - et plus précisément au travers des trous **35** formés dans la zone centrale de la paroi **38** secondaire, comme le suggèrent les flèches noires à deux pointes de la figure 5.

Le fluide sous pression emplit la cavité **27** et circule depuis les trous **35** jusqu'à l'ouverture **37** (ou jusqu'aux ouvertures **37**) de sortie, au travers de laquelle (desquelles) le fluide se déverse dans le collecteur **43**. Dans la cavité **27**, le sens de circulation du fluide est centrifuge en raison de la disposition périphérique de l'ouverture **37** (des ouvertures **37**) de sortie. On comprend aisément que le fluide présente son maximum de capacité calorifique à son entrée dans la cavité **27** (au centre du fond **7** de moule dans le mode de réalisation illustré). Il perd progressivement sa capacité calorifique en circulant dans la cavité **27**, de sorte que les échanges thermiques sont moindres dans les zones de la cavité **27** les plus éloignées de l'ouverture **35** d'entrée (au voisinage de la périphérie du fond **7** de moule dans le mode de réalisation illustré).

Cette perte de capacité calorifique ne pose pas de réel problème dans le cas d'un refroidissement du fond d'un récipient. En effet, la périphérie du fond du récipient subit un refroidissement naturel accru lors de son soufflage, en comparaison de sa partie centrale, relativement plus épaisse et moins déformée. En d'autres termes, la périphérie du fond nécessite un moindre refroidissement (à quelques degrés près) que le centre.

Il en va d'ailleurs de même dans le cas d'une thermofixation du fond d'un récipient. En effet, la périphérie du fond, qui subit une double orientation (dans le sens axial et radial), présente naturellement une cristallinité supérieure à celle du centre, plus amorphe en raison de sa seule déformation axiale. La périphérie nécessite par conséquent un moindre apport calorifique que le centre pour présenter un taux de cristallinité similaire.

La configuration monobloc de la cavité **26**, **27** (c'est-à-dire sous forme d'un volume unitaire) permet de faire circuler le fluide de manière sensiblement homogène vers les zones nécessitant un échange de calories similaire (par exemple les réserves **13** en creux correspondant aux pieds).

Il est envisageable de configurer la cavité **27** de manière que certaines zones permettent un échange calorifique accru ou, inversement, moindre, selon un profil prédéterminé dans lequel certaines parties du récipient doivent recevoir (ou céder) un nombre de calories accru (ou inversement moindre), et ce quel que soit le relief de la surface **9** de moulage.

En amincissant la paroi **8** de moulage, on peut maximiser le rendement des échanges thermiques. Cela permet de réaliser des économies d'énergie, d'améliorer la qualité des récipients produits et de réduire le temps de cycle en limitant la durée du contact du récipient formé avec la surface **9** de moulage.

La réalisation monobloc de l'élément **3**, **7** de moule (typiquement le fond **7** de moule) dans lequel est formée la cavité **26**, **27** permet d'améliorer l'étanchéité de celui-ci. En effet, la circulation du fluide dans l'élément **3**, **7** de moule s'effectue dans une seule et même pièce, dont les différentes parties (en particulier la paroi **8** de moulage et la paroi **38** secondaire pour le fond **7** de moule) sont formées d'un seul tenant. En revanche, le raccordement de l'élément **3**, **7** de moule au conduit **16**, **17** d'alimentation et au conduit **18**, **19** d'évacuation doit être rendue étanche, ce qui peut être réalisé au moyen de simples joints toriques ou de joints à lèvres.

La fabrication de l'élément **3**, **7** de moule avec sa cavité **26**, **27** incluse peut être réalisée par fabrication directe, de préférence par la technique dite de la construction laser additive directe, traduction de la terminologie anglo-saxonne Direct Metal Laser Sintering (DMLS), qui consiste, en exploitant un modèle tridimensionnel de l'élément, à déposer des couches successives d'une poudre métallique et à effectuer après chaque dépôt une fusion locale de la poudre au moyen d'un laser de puissance pointant vers les zones destinées à former la matière de l'élément à fabriquer. Après la dernière passe, l'élément ainsi fabriqué (ou une ébauche de celui-ci) est extrait tandis que la poudre résiduelle (non fondue) est récupérée en vue d'une réutilisation ultérieure. La construction laser additive directe peut être mise en oeuvre au sein d'une machine telle que celle commercialisée sous la dénomination commerciale EOSINT M 280 par la société Electro Optical Systems.

Cette technique permet notamment de réaliser le fond **7** de moule décrit ci-dessus, avec la cavité **27** totalement incluse dans la matière du fond **7** et épousant le relief de la surface **9** de moulage, ce qui ne peut être réalisé à l'aide des techniques de fabrication ordinaire par enlèvement de matière, notamment par tournage ou par fraisage. La technique de la fabrication directe permet de simplifier et d'accélérer la fabrication des éléments **3**, **7** de moule en limitant le nombre de machines et d'opérations d'usinage. En pratique, la fabrication complète de l'élément **3**, **7** de moule comprend deux opérations successives : une première opération de fabrication directe d'une ébauche de l'élément **3**, **7**, puis une seconde opération de polissage de la surface **5**, **9** de moulage de l'ébauche pour obtenir l'élément **3**, **7** de moule final.

Selon les techniques de fabrication directe employées, et selon la forme de la cavité **26**, **27**, il peut être opportun de prévoir des artefacts permettant d'assurer une bonne rigidité structurelle (au moins locale) de l'élément **3**, **7** de moule, sans que ces artefacts aient un impact notable sur le fonctionnement de celui-ci. En particulier, dans l'exemple de fond **7** de moule décrit ci-dessus, on peut prévoir des raidisseurs **53** interposés entre la paroi **8** de moulage et la paroi **38** secondaire, de sorte à limiter le risque de fissuration dû aux cycles thermiques et aux contraintes mécaniques résultant de différence de pression entre l'intérieur de la cavité **27** (où le fluide circule à une pression de l'ordre de 6 à 7 bars), et l'extérieur du fond **7**, notamment du côté de la surface **9** de moulage (où la pression exercée par le récipient en cours de formage est comprise entre 7 et 30 bars environ) ou du côté de la surface **21** externe, où règne la pression atmosphérique.

Ces raidisseurs **53** peuvent se présenter sous forme de piliers disséminés dans la cavité **27** et reliant la paroi **38** secondaire à la paroi **8** de moulage. Un tel pilier **53** est partiellement visible sur la figure 4. On peut effectuer une répartition de ces piliers **53** à l'aide d'une simulation par élément finis réalisée sur le modèle tridimensionnel de l'élément **3**, **7** de moule, pour les placer dans les zones où, selon la simulation, sont concentrées les contraintes mécaniques.

En variante, ou en combinaison avec ces piliers, la cavité **26**, **27** peut être au moins localement raidie au moyen d'un réseau **R** tridimensionnel reliant la surface **30**, **31** interne de la paroi **4**, **8** de moulage à la surface **32**, **33** arrière. Un tel réseau **R**, illustré de manière schématique dans le médaillon de détail de la figure 5 dans le cas du fond **7** de moule, est poreux et n'empêche donc pas le fluide de circuler dans la cavité **26**, **27**, même si un ralentissement du flux peut être constaté en fonction de la densité du réseau. L'inclusion d'un tel réseau tridimensionnel dans la cavité **26**, **27** est réalisable sans difficulté par la technique de la construction laser additive directe, comme illustré dans la demande de brevet américain US 2013/171019 (EOS).

On comprend par conséquent que le terme « cavité » couvre à la fois un espace vide défini à l'intérieur de l'élément **3**, **7** de moule, et un espace qui, sans être vide au sens littéral, demeure poreux à la manière d'un filtre au point de laisser s'écouler relativement librement un fluide (tel que de l'eau ou de l'huile), sans générer de perte de charge notable.

Comme nous l'avons vu, le matériau employé pour la fabrication de l'élément **3**, **7** de moule est de préférence métallique ; il peut notamment s'agir d'un acier ou d'un aluminium (éventuellement allié). Dans le cas où le fluide circulant dans l'élément **3**, **7** de moule est de l'eau, il est préférable que le matériau employé pour sa fabrication soit résistant à la corrosion. On emploiera donc avantageusement un acier inoxydable, dont certaines nuances sont disponibles en poudre destinées à la construction laser additive directe (par exemple l'inox martensitique référencé, en norme européenne, sous la désignation numérique 1.4542 ou sous la désignation symbolique X5CrNiCuNb16-4). Un aluminium allié au silicium et au magnésium peut également convenir : à titre d'exemple, l'alliage AlSi10Mg est disponible en poudre destinée à la construction laser additive directe.

Diverses variantes peuvent être prévues.

Ainsi, une bague **54** d'usure peut être intégrée au fond **7** de moule. Une telle bague **54** d'usure a pour fonction d'assurer un indexage correct du fond **7** de moule par rapport aux demi-moules **3** par emboîtement avec un anneau **55** complémentaire solidaire de ceux-ci, lors de leur fermeture. La bague **54** d'usure concentre les frottements (et donc l'usure) lors des mouvements d'ouverture et de fermeture du moule **1**. La bague **54** d'usure peut être intégrée à la sellette **10**. Cependant, selon un autre mode de réalisation illustré en pointillés sur la figure 5, cette bague **54** d'usure est formée en saillie sur la surface **50** externe du fond **7** de moule.

Par ailleurs, plusieurs cavités indépendantes peuvent être prévues dans le fond **7** de moule, dans lesquelles peuvent circuler des fluides caloporteurs de températures différentes. Dans ce cas, le fond **7** de moule peut être muni de plusieurs collecteurs (un pour chaque cavité), et de plusieurs descentes (une pour chaque collecteur). Plusieurs descentes peuvent d'ailleurs être prévues pour un même collecteur, afin de favoriser l'évacuation du fluide caloporteur. Il est cependant préférable de faire converger ces descentes vers un même conduit d'évacuation, ce qui permet de ne brancher sur la sellette **10** qu'une seule tubulure d'évacuation.

## Revendications

1. Fond (**7**) de moule monobloc destiné à un moule (**1**) pour la fabrication de récipients par soufflage ou étirage soufflage à partir de préformes en matière plastique, ce fond (**7**) de moule comprenant une paroi (**8**) de moulage ayant une surface (**9**) de moulage en relief à l'empreinte d'au moins une partie d'un fond de récipient, ce fond (**7**) de moule étant **caractérisé en ce qu'**il comprend une cavité (**27**) incluse dans le fond (**7**) de moule, cette cavité (**27**) étant délimitée par une enveloppe (**29**) surfacique intégralement définie par le fond (**7**) de moule et incluant une surface (**31**) interne de la paroi (**8**) de moulage, opposée à la surface (**9**) de moulage et épousant le relief de celle-ci, et une surface (**33**) arrière en regard de la surface (**31**) interne, le fond (**7**) de moule étant muni d'au moins une ouverture (**35**) d'entrée et d'au moins une ouverture (**37**) de sortie pour la circulation d'un fluide caloporteur dans la cavité (**27**).

2. Fond (**7**) de moule selon la revendication 1, **caractérisé en ce que** la surface interne (**31**) de la paroi (**8**) de moulage couvre sensiblement la totalité de la surface (**9**) de moulage.

3. Fond (**7**) de moule selon la revendication 1 ou la revendication 2, **caractérisé en ce que** la paroi (**8**) de moulage présente une épaisseur sensiblement uniforme.

4. Fond (**7**) de moule selon l'une des revendications précédentes, **caractérisé en ce que** la paroi (**8**) de moulage présente une épaisseur comprise entre 0,5 mm et 5 mm.

5. Fond (**7**) de moule selon la revendication 4, **caractérisé en ce que** la paroi (**8**) de moulage présente une épaisseur de 1 mm environ.

6. Fond (**7**) de moule selon l'une des revendications précédentes, **caractérisé en ce que** la surface (**33**) arrière est portée par une paroi (**38**) secondaire qui rejoint la paroi (**8**) de moulage sur un bord (**39**) périphérique du fond (**7**) de moule.

7. Fond (**7**) de moule selon la revendication 6, **caractérisé en ce que** l'ouverture (**35**) d'entrée est formée par une série de trous (**35**) traversants ménagés dans la paroi (**38**) secondaire.

8. Fond (**7**) de moule selon la revendication 7, **caractérisé en ce qu'**il comprend une chambre (**40**) de distribution qui jouxte la cavité (**27**) en étant séparée de celle-ci par une portion centrale de la paroi (**38**) secondaire dans laquelle sont ménagés les trous (**35**) traversants.

9. Fond (**7**) de moule selon l'une des revendications précédentes, **caractérisé en ce qu'**il comprend au moins un collecteur (**43**) dans lequel débouche au moins une ouverture (**37**) de sortie.

10. Fond (**7**) de moule selon la revendication 9, **caractérisé en ce que** le collecteur (**43**) se présente sous forme d'un conduit annulaire périphérique.

11. Fond (**7**) de moule selon la revendication 10, **caractérisé en ce qu'**il comprend au moins une descente (**47**) dans laquelle débouche le collecteur (**43**), et qui se termine par un orifice (**48**) d'évacuation.

12. Fond (**7**) de moule selon l'une des revendications précédentes, **caractérisé en ce qu'**il comprend des piliers (**53**) et/ou un réseau (**R**) tridimensionnel reliant la surface (**31**) interne de la paroi (**8**) de moulage à la surface (**33**) arrière.

13. Moule (**1**) pour la fabrication de récipients à partir d'ébauches en matière plastique, qui comprend au moins un fond (**7**) de moule selon l'une des revendications précédentes.

14. Procédé de fabrication d'un fond (**7**) de moule selon l'une des revendications 1 à 11, **caractérisé en ce qu'**il comprend une phase d'obtention d'une ébauche du fond (**7**) de moule par fabrication directe à partir d'une poudre métallique.

15. Procédé de fabrication selon la revendication 14, **caractérisé en ce que** l'ébauche de fond (**7**) de moule est obtenue par construction laser additive directe.

## Patentansprüche

1. Einteiliger Formboden (**7**), der für eine Form (**1**) für das Herstellen von Behältern durch Blasen oder Streckblasen ausgehend von Vorformlingen aus Kunststoff bestimmt ist, wobei dieser Formboden (**7**) eine Formwand (**8**) beinhaltet, die eine Formfläche (**9**) mit einem Relief entsprechend dem Abdruck mindestens eines Teils eines Behälterbodens aufweist, wobei dieser Formboden (**7**) **dadurch gekennzeichnet ist, dass** er einen in dem Formboden (**7**) eingeschlossenen Hohlraum (**27**) beinhaltet, wobei dieser Hohlraum (**27**) durch eine flächige Hülle (**29**) begrenzt wird, die durch den Formboden (**7**) vollständig definiert wird und eine innere Fläche (**31**) der Formwand (**8**), die der Formfläche (**9**) gegenüberliegt und die auf ihr Relief abgestimmt ist, und eine hintere Fläche (**33**) gegenüber der inneren Fläche (**31**) einschließt, wobei der Formboden (**7**) mit mindestens einer Eintrittsöffnung (**35**) und mindestens einer Austrittsöffnung (**37**) für die Zirkulation eines Wärmeträgerfluids in dem Hohlraum (**27**) versehen ist.

2. Formboden (**7**) nach Anspruch 1, **dadurch gekennzeichnet, dass** die innere Fläche (**31**) der Formwand (**8**) die gesamte Formfläche (**9**) im Wesentlichen abdeckt.

3. Formboden (**7**) nach Anspruch 1 oder Anspruch 2, **dadurch gekennzeichnet, dass** die Formwand (**8**) eine im Wesentlichen einheitliche Dicke aufweist.

4. Formboden (**7**) nach einem der vorhergehenden Ansprüche, **dadurch gekennzeichnet, dass** die Formwand (**8**) eine Dicke zwischen 0,5 mm und 5 mm aufweist.

5. Formboden (**7**) nach Anspruch 4, **dadurch gekennzeichnet, dass** die Formwand (**8**) eine Dicke von ungefähr 1 mm aufweist.

6. Formboden (**7**) nach einem der vorhergehenden Ansprüche, **dadurch gekennzeichnet, dass** die hintere Fläche (**33**) durch eine sekundäre Wand (**38**) gestützt wird, die an einer Umfangskante (**39**) des Formbodens (**7**) auf die Formwand (**8**) trifft.

7. Formboden (**7**) nach Anspruch 6, **dadurch gekennzeichnet, dass** die Eintrittsöffnung (**35**) durch eine Reihe von Durchgangslöchern (**35**), die in die sekundäre Wand (**38**) eingebracht sind, gebildet ist.

8. Formboden (**7**) nach Anspruch 7, **dadurch gekennzeichnet, dass** er eine Verteilerkammer (**40**) beinhaltet, die an den Hohlraum (**27**) angrenzt und von diesem durch einen mittigen Abschnitt der sekundären Wand (**38**), in den die Durchgangslöcher (**35**) eingebracht sind, getrennt ist.

9. Formboden (**7**) nach einem der vorhergehenden Ansprüche, **dadurch gekennzeichnet, dass** er mindestens einen Sammler (**43**) beinhaltet, in den mindestens eine Austrittsöffnung (**37**) mündet.

10. Formboden (**7**) nach Anspruch 9, **dadurch gekennzeichnet, dass** der Sammler (**43**) die Form einer umlaufenden Ringleitung besitzt.

11. Formboden (**7**) nach Anspruch 10, **dadurch gekennzeichnet, dass** er mindestens einen Ablauf (**47**) beinhaltet, in den der Sammler (**43**) mündet und der mit einem Auslass (**48**) endet.

12. Formboden (**7**) nach einem der vorhergehenden Ansprüche, **dadurch gekennzeichnet, dass** er Säulen (**53**) und/oder ein dreidimensionales Netzwerk (**R**) beinhaltet, um die innere Fläche (**31**) der Formwand (**8**) mit der hinteren Wand (**33**) zu verbinden.

13. Form (**1**) für das Herstellen von Behältern ausgehend von Rohlingen aus Kunststoff, die mindestens einen Formboden (**7**) nach einem der vorhergehenden Ansprüche beinhaltet.

14. Verfahren für das Herstellen eines Formbodens (**7**) nach einem der Ansprüche 1 bis 11, **dadurch gekennzeichnet, dass** es einen Schritt des Erzeugens eines Rohlings des Formbodens (**7**) durch direkte Herstellung ausgehend von einem Metallpulver beinhaltet.

15. Herstellverfahren nach Anspruch 14, **dadurch gekennzeichnet, dass** der Rohling des Formbodens (**7**) durch direkte laseradditive Fertigung erzeugt wird.

## Claims

1. One-piece mould bottom (7) intended for a mould (1) for the manufacture of containers by blow moulding or stretch blow moulding from preforms made of plastic, this mould bottom (7) comprising a moulding wall (8) having a moulding surface (9) in relief which is the negative of at least part of a container bottom, this mould bottom (7) being **characterized in that** it comprises a cavity (27) included in the mould bottom (7), this cavity (27) being bounded by a surface envelope (29) entirely defined by the mould bottom (7) and including an internal surface (31) of the moulding wall (8), this being opposite the moulding surface (9) and matching the relief thereof, and a rear surface (33) facing the internal surface (31), the mould bottom (7) being provided with at least one inlet opening (35) and at least one outlet opening (37) for a heat transfer fluid to flow in the cavity (27).

2. Mould bottom (7) according to Claim 1, **characterized in that** the internal surface (31) of the moulding wall (8) covers essentially the entirety of the moulding surface (9).

3. Mould bottom (7) according to Claim 1 or Claim 2, **characterized in that** the moulding wall (8) has an essentially uniform thickness.

4. Mould bottom (7) according to one of the preceding claims, **characterized in that** the moulding wall (8) has a thickness of between 0.5 mm and 5 mm.

5. Mould bottom (7) according to Claim 4, **characterized in that** the moulding wall (8) has a thickness of approximately 1 mm.

6. Mould bottom (7) according to one of the preceding claims, **characterized in that** the rear surface (33) is borne by a secondary wall (38) which meets the moulding wall (8) at a peripheral rim (39) of the mould bottom (7) .

7. Mould bottom (7) according to Claim 6, **characterized in that** the inlet opening (35) consists of a set of through-holes (35) created in the secondary wall (38).

8. Mould bottom (7) according to Claim 7, **characterized in that** it comprises a distribution chamber (40) which adjoins the cavity (27), being separated therefrom by a central portion of the secondary wall (38) in which the through-holes (35) are created.

9. Mould bottom (7) according to one of the preceding claims, **characterized in that** it comprises at least one manifold (43) into which at least one outlet opening (37) opens.

10. Mould bottom (7) according to Claim 9, **characterized in that** the manifold (43) takes the form of a peripheral annular duct.

11. Mould bottom (7) according to Claim 10, **characterized in that** it comprises at least one descent (47) into which the manifold (43) opens, and which ends at a discharge orifice (48).

12. Mould bottom (7) according to one of the preceding claims, **characterized in that** it comprises pillars (53) and/or a three-dimensional network (R) connecting the internal surface (31) of the moulding wall (8) to the rear surface (33).

13. Mould (1) for the manufacture of containers from blanks made of plastic material, which comprises at least one mould bottom (7) according to one of the preceding claims.

14. Method for the manufacture of a mould bottom (7) according to one of Claims 1 to 11, **characterized in that** it comprises a phase of obtaining a blank of the mould bottom (7) by direct manufacture from a metal powder.

15. Manufacturing method according to Claim 14, **characterized in that** the blank of the mould bottom (7) is obtained by direct additive laser construction.
